# EUROPÄISCHE PATENTSCHRIFT

(11) **EP 1 163 972 B1**
(45) Veröffentlichungstag und Bekanntmachung des Hinweises auf die Patenterteilung: **10.01.2007**
(21) Anmeldenummer: 01112548.1
(22) Anmeldetag: 23.05.2001
(51) Int. Cl.: B23Q 1/00, B23Q 5/04, B23Q 11/10

(54) **Werkzeugmaschine mit einer ankuppelbaren Motorspindel**
Machine tool to which a motor spindle can be coupled
Machine-outil avec broche de moteur accouplable

(30) Priorität: 29.05.2000 DE 20009486 U
(43) Veröffentlichungstag der Anmeldung: 19.12.2001
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas Heinz Jörn

(56) Entgegenhaltungen:
- DE-U- 29 609 893
- PATENT ABSTRACTS OF JAPAN vol. 011, no. 188 (M-599), 17. Juni 1987 (1987-06-17) & JP 62 015048 A (NIPPON KOGAKU KK), 23. Januar 1987 (1987-01-23)

## Beschreibung

Die Erfindung betrifft eine Werkzeugmaschine mit einem Hauptspindelgehäuse, einer drehend antreibbaren Hauptspindel mit einer Werkzeugaufnahme, einer Motorspindel mit einem Gehäuse, einem in die Werkzeugaufnahme der Hauptspindel einsetzbaren Tragzapfen, einem Antriebsmotor und einer von diesem angetriebenen Spindel mit einer Werkzeugaufnahme und mit einer Medienkupplung, die ein erstes an der Motorspindel angeordnetes Kupplungsteil und ein zweites an der Werkzeugmaschine angeordnetes Kupplungsteil aufweist.

Bei einer aus der DE 296 23 469 U1 bekannten Werkzeugmaschine der angegebenen Art trägt die Motorspindel ein Basisteil mit einem Ausleger, an dessen freiem Ende ein Kupplungsteil zur Verbindung mit einem an entsprechender Stelle fest an der Fräsmaschine installierten Gegenstück ausgebildet ist. Durch die Kupplung werden die Antriebsenergie, Kühlwasser für den Antrieb und Druckluft in die Motorspindel eingeführt. Diese bekannte Ausgestaltung hat den Nachteil, daß der ausladende Ausleger den Einsatzbereich der Motorspindel vor allem hinsichtlich der Bearbeitung tieferer Hohlräume einschränkt, einen automatischen Werkzeugwechsel behindert und den Platzbedarf im Werkzeugmagazin der Werkzeugmaschine erhöht.

Aus JP 62 015048 A ist eine Werkzeugmaschine mit einer Hauptspindel und einer in diese eingesetzten Motorspindel bekannt, bei der das erste an der Motorspindel angeordnete Kupplungsteil sich an dem in der Hauptspindel angeordneten Tragzapfen befindet. Die Hauptspindel weist eine seitliche Öffnung auf, durch welche das zweite Kupplungsteil längs einer senkrecht zur Spindelachse verlaufenden Bewegungsbahn an das erste Kupplungsteil herangeführt wird.

Der Erfindung liegt die Aufgabe zugrunde, bei einer Werkzeugmaschine der eingangs genannten Art das automatische Einsetzen der Motorspindel in die Werkzeugaufnahme der Einsetzen der Motorspindel in die Werkzeugaufnahme der Hauptspindel zu vereinfachen und den Platzbedarf der Motorspindel im Arbeitsbereich der Werkzeugmaschine und im Werkzeugmagazin klein zu halten.

Diese Aufgabe wird erfindungsgemäß dadurch gelöst, daß das erste Kupplungsteil der Medienkupplung an dem dem Tragzapfen benachbarten Ende des Gehäuses der Motorspindel angebracht ist, daß das zweite Kupplungsteil in einer an dem Hauptspindelgehäuse angebrachten Geradführung bewegbar gelagert und entlang der Geradführung in eine die Kupplungsteile miteinander verbindende Kupplungsposition bewegbar ist und daß die von der Geradführung gebildete Bewegungsbahn derart in einem Winkel von bis zu 60° zur Hauptspindelachse geneigt ist, daß sie sich von der Motorspindel aus gesehen in Richtung des Hauptspindelgehäuses von der Hauptspindelachse entfernt. Die geeignete Größe des Winkels der Bewegungsbahn ist in erster Linie durch die baulichen Gegebenheiten der Werkzeugmaschine bestimmt. Im allgemeinen dürfte es vorteilhaft sein, wenn der Winkel im Bereich von 30° bis 60° liegt, wobei die kleineren Winkelgrößen zu bevorzugen sind.

Die erfindungsgemäße Gestaltung der Werkzeugmaschine ermöglicht eine äußerst kompakte Gestaltung der Motorspindel mit dem daran angeordneten ersten Kupplungsteil, so daß die Motorspindel nur einen geringen Platzbedarf im Werkzeugmagazin benötigt und auch der von ihr beanspruchte Bewegungsraum beim automatischen Transport vom Werkzeugmagazin zur Hauptspindel und zurück klein ist. Weiterhin wird durch die Heranführung des zweiten Kupplungsteils in einem spitzen Winkel zur Achse der Hauptspindel der für das Eintauchen der Motorspindel in ein Werkstück benötigte Raum weniger eingeschränkt, wobei die durch das Vorhandensein der Geradführung noch immer gegebene Einschränkung mit wachsendem radialen Abstand von der Motorspindel abnimmt.

Von Vorteil ist auch der verringerte Bauaufwand für die Anbringung des ersten Kupplungsteils an der Motorspindel.

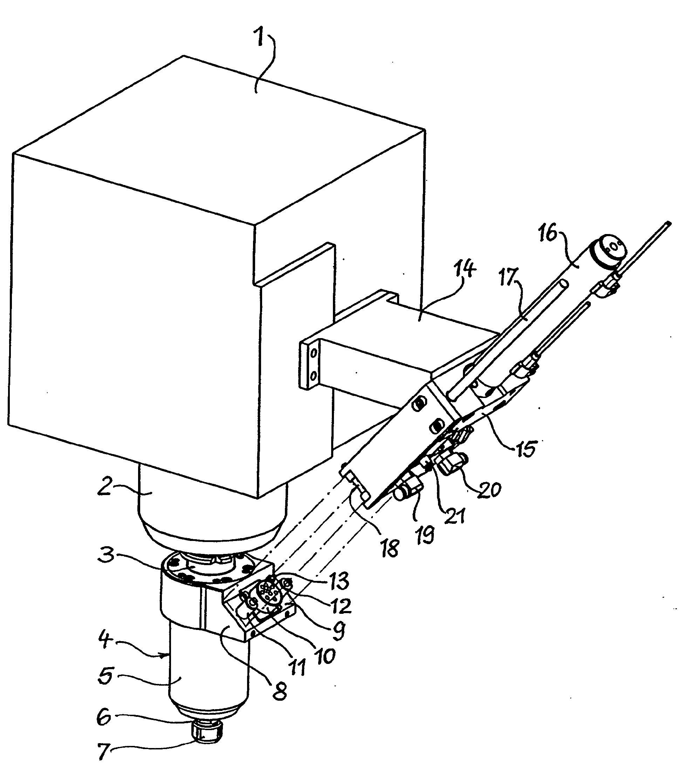

Die Erfindung wird nachfolgend anhand eines Ausführungsbeispiels näher erläutert, das in der Zeichnung dargestellt ist.

Die Zeichnung zeigt ein Hauptspindelgehäuse 1 und eine Hauptspindel 2 einer Werkzeugmaschine. In die Werkzeugaufnahme der Hauptspindel 2 ist ein Tragzapfen 3 einer Motorspindel 4 eingesetzt und dort verankert. Die Motorspindel 4 weist in einem zylindrischen Gehäuse 5 einen frequenzgesteuerten elektrischen Antriebsmotor auf, der eine Spindel 6 mit einer Werkzeugaufnahme 7 antreibt. An seinem dem Tragzapfen 3 benachbarten Ende ist an dem Gehäuse 5 ein Kupplungsteil 8 einer Medienkupplung angebracht, das auf einer geneigten Fläche 9 ein elektrisches Kontaktelement 10, Kühlwasseranschlüsse 11, 12 und einen Druckluftanschluß 13 aufweist. Die Fläche 9 liegt in einer Ebene, die die gemeinsame Mittelachse der Hauptspindel 2 und der Motorspindel 4 in einem Winkel von 45° schneidet.

An dem Hauptspindelgehäuse 1 ist ein Träger 14 befestigt, der einen Führungskörper 15 trägt, an welchem ein Hubzylinder 16 befestigt ist. Beiderseits des Hubzylinders 16 und parallel zu diesem befinden sich Führungsstangen 17, die in Bohrungen des Führungskörpers 15 verschiebbar geführt sind und mit diesem eine Geradführung für ein am unteren Ende der Führungsstangen und an der Kolbenstange des Hubzylinders 16 angebrachtes Kupplungsteil 18 der Medienkupplung bilden. Das Kupplungsteil 18 weist die Gegenanschlüsse für das Kupplungsteil 8 sowie Anschlüsse 19, 20 zum Anschluß von Kühlwasserleitungen, einen Anschluß 21 für eine Druckluftleitung und einen nicht dargestellten Anschluß für ein elektrisches Kabel auf. Die Längsachsen des Hubzylinders 16 und der Führungsstangen 17 liegen in einer Ebene, die senkrecht zur Fläche 9 ausgerichtet ist und die die Fläche 9 im wesentlichen in der Mitte und die gemeinsame Achse von Hauptspindel 2 und Motorspindel 4 in einem Winkel von 45° schneidet.

Die Zeichnung zeigt eine Betriebssituation, in der das Kupplungsteil 18 vollständig in seine Ruhelage zurückgefahren ist und die Motorspindel 4 anstelle eines Werkzeugs in die Hauptspindel 2 eingesetzt worden ist, um nun als nächstes automatisch an die zu ihrem Betrieb notwendigen Versorgungsleitungen angekuppelt zu werden. Zur Durchführung des Kupplungsvorgangs wird der Hubzylinder 16 mit Druckmittel beaufschlagt und dadurch das Kupplungsteil 18 geführt von den Führungsstangen 17 und der Kolbenstange des Hubzylinders 16 nach unten bewegt, bis es in Kupplungskontakt mit dem Kupplungsteil 8 gebracht ist. Durch entgegengesetzte Beaufschlagung des Hubzylinders 16 mit Druckmittel kann das Kupplungsteil 18 wieder von dem Kupplungsteil 8 gelöst und in die dargestellte Ruheposition zurückgefahren werden. Anschließend kann die Motorspindel 4 von der Hauptspindel getrennt und gegebenenfalls durch ein anderes Bearbeitungswerkzeug ersetzt werden.

## Patentansprüche

1. Werkzeugmaschine mit einem Hauptspindelgehäuse (1), einer drehend antreibbaren Hauptspindel (2) mit einer Werkzeugaufnahme, einer Motorspindel (4) mit einem Gehäuse (5), einem in die Werkzeugaufnahme der Hauptspindel (2) einsetzbaren Tragzapfen (3), einem Antriebsmotor und einer von diesem angetriebenen Spindel (6) mit einer Werkzeugaufnahme (7) und mit einer Medienkupplung, die ein erstes an der Motorspindel angeordnetes Kupplungsteil und ein zweites an der Werkzeugmaschine angeordnetes Kupplungsteil aufweist, **dadurch gekennzeichnet, daß** das erste Kupplungsteil (8) der Medienkupplung an dem dem Tragzapfen (3) benachbarten Ende des Gehäuses (5) der Motorspindel angebracht ist, daß das zweite Kupplungsteil (18) in einer an dem Hauptspindelgehäuse (1) angebrachten Geradführung (15, 17) bewegbar gelagert und entlang der Geradführung (15, 17) in eine die Kupplungsteile (8, 18) miteinander verbindende Kupplungsposition bewegbar ist und daß die von der Geradführung (15, 17) gebildete Bewegungsbahn derart in einem Winkel von bis zu 60° zur Hauptspindelachse geneigt ist, daß sie sich von der Motorspindel (4) aus gesehen in Richtung des Hauptspindelgehäuses (1) von der Hauptspindelachse entfernt.

2. Werkzeugmaschine nach Anspruch 1, **dadurch gekennzeichnet, daß** die Bewegungsbahn der Geradführung (15, 17) in einem Winkel von 30° bis 60° zur Hauptspindelachse geneigt ist.

## Claims

1. Machine tool comprising a main spindle housing (1), a rotationally drivable main spindle (2) having a tool socket, a motor spindle (4) having a housing (5), a supporting shank (3) which can be inserted into the tool socket of the main spindle (2), a drive motor and a spindle (6) driven thereby and having a tool socket (7) and having a media coupling, which comprises a first coupling part arranged on the motor spindle and a second coupling part arranged on the machine tool, **characterised in that** the first coupling part (8) of the media coupling is mounted on the end adjacent to the supporting shank (3) of the housing (5) of the motor spindle, **in that** the second coupling part (18) is movably mounted in a slide bar (15, 17) mounted on the main spindle housing (1) and is movable along the slide bar (15, 17) into a coupling position that connects the coupling parts (8, 18) to each other and **in that** the movement path formed by the slide bar (15, 17) is inclined at an angle of up to 60° to the main spindle axis in such a way that it moves away from the main spindle axis seen from the motor spindle (4) in the direction of the main spindle housing (1).

2. Machine tool according to claim 1, **characterised in that** the movement path of the slide bar (15, 17) is inclined at an angle of from 30° to 60° to the main spindle axis.

## Revendications

1. Machine outil avec un carter d'arbre principal (1), un arbre principal (2) pouvant être entraîné en rotation et muni d'un logement pour un outil, un arbre moteur (4) avec un boîtier (5), un tourillon porteur (3) pouvant être introduit dans le logement d'outil de l'arbre principal (2), un moteur d'entraînement et un arbre (6) pouvant être entraîné par ce dernier et muni d'un logement pour un outil (7) et d'un couplage de moyens qui présente une première partie d'accouplement disposée sue l'arbre moteur et une deuxième partie d'accouplement disposée sur la machine outil, **caractérisé en ce que** la première partie d'accouplement (8) du couplage de moyens est disposée sur l'extrémité du boîtier (5) de l'arbre moteur, voisine du tourillon porteur (3), **en ce que** la deuxième partie d'accouplement (18) est logée de façon mobile dans un guidage droit (15, 17) disposé sur le carter d'arbre principal (1) et peut être déplacée le long du guidage droit (15, 17) dans une position d'accouplement reliant entre elles les parties d'accouplement (8, 18), et **en ce que** la course de déplacement formée par le guidage droit (15, 17) est inclinée de telle sorte d'un angle pouvant aller jusqu'à 60° par rapport à l'axe de l'arbre principal que ladite course, observée depuis l'arbre moteur (4) en direction du carter d'arbre principal (1), s'éloigne de l'axe de l'arbre principal.

2. Machine outil selon la revendication 1, **caractérisé en ce que** la course de déplacement du guidage droit (15, 17) est inclinée d'un angle compris entre 30° et 60° par rapport à l'axe de l'arbre principal.
